# EUROPEAN PATENT APPLICATION

(11) **EP 2 781 809 A1**
(43) Date of publication of application: **24.09.2014**
(21) Application number: 14160569.1
(22) Date of filing: 18.03.2014
(51) Int. Cl.: F16K 3/18, F16K 3/34

(54) **A blind flange/process valve**

(30) Priority: 18.03.2013 NO 20130399
(71) Applicant: Seut Maritime AS, 1621 Fredrikstad (NO)
(72) Inventor: Kjelkvik, Torbjørn, N-1621 FREDRIKSTAD (NO)
(74) Representative: Oslo Patentkontor AS

(57) **Abstract**

It is disclosed a blind flange/process valve including a housing (1) with an upper storage chamber (4) and a lower operating chamber, the lower operating chamber including two openings (2, 3) with valve seats (25, 26), a spindle (6) operating a spool with two discs (8, 9), and a closing mechanism located between the discs (8, 9), the closing mechanism operating to close the valve by pressing the discs (8, 9) against the valve seats (25, 26). Said closing mechanism includes an upper cone (13) and a lower cone (14) opposing each other, wherein the cones are acting on the discs providing a symmetrical pressure on the discs (8, 9).

## Description

### Field of the Invention

The present invention relates to a blind flange or process valve. Such valves are used in ships, drilling and production rigs, and various processing plants.

### Background

Blind flange valves are often employed when the valve is expected to remain in one position, i.e. either open or closed, for an extended period. The reason why blind flange valves may be preferred over other types of valves is that other valves may get stuck due to deposits and corrosion when standing in a fixed position for an extended period.

A blind flange valve includes a spool intended to close the flow path through the valve housing by being pressed against the input/output openings from the inside of the valve housing. The spool includes two discs mounted in a back-to-back relationship and joined by a valve rod. The valve rod may consist of two parts threaded together, and may thus be expanded pressing the discs against the openings.

The spool may be removed completely from the flow path by contracting the discs and then pulling the spool from the valve housing.

A simple blind flange valve may include a top cover that may be removed in order to provide access to the interior of the valve by an operator. The operator may then insert/remove the spool through the exposed opening and expand or contract the discs using a spanner. However, in order to operate the valve, the fluid flow must be closed off by an ordinary valve connected in series with the blind flange valve, and the housing must be opened to give the operator access to the interior of the valve. This makes the operation of such a valve rather cumbersome.

Other blind valves may be operated from outside the housing with a hand wheel or actuator. The housing must then include a chamber for storing the spool when not in use. The discs are operated with a threaded spindle connected to a wedge-shaped slide acting on the discs. This solution has several advantages, among other that it may be operated under fluid pressure, i.e. without having the fluid flow shut off by a serial-connected ordinary valve and that it may be operated without opening the housing. However, this solution will provide an uneven pressure on the discs as the slide will provide a larger pressure on the upper parts of the discs than on the lower parts. In particular when the valve becomes a bit worn, this asymmetrical pressure is apt to cause leaks from the lower parts of the discs. The skewed pressure may also cause the slide mechanism to become stuck. Such a valve is known from Norwegian patent NO 329653.

From US patent 5,158,264 there is known a blind flange valve with two rectangular plates and two wedges which are used to press the plates against the valve seats. The lower wedge is stationary while the upper wedge is raised and lowered with a shaft.

US patent 4,573,660 shows another blind flange valve with discs which are pressed against the valve seats with wedges.

### Summary of the Invention

It is an object of the present invention to provide a blind flange/process valve that may be operated externally and has a very reliable mechanism.

This is achieved in a valve as claimed in the appended claims.

In particular, the inventive valve includes a housing with an upper storage chamber and a lower operating chamber, the lower operating chamber including two openings with valve seats, a spindle (6) operating a spool with two discs and a closing mechanism located between the discs, the closing mechanism operating to close the valve by pressing the discs against the valve seats. Said closing mechanism includes an upper cone and a lower cone opposing each other, wherein the cones are acting on the discs providing a symmetrical pressure on the discs. Said closing mechanism includes a cylinder with transverse openings for rods acting on the discs, the cylinder being closed in its upper end by a bushing with an opening for the spindle, the upper cone and the lower cone being arranged inside the cylinder, wherein the upper cone includes an upper part with a bore with a tab, a conical middle part, a threaded bolt at the bottom, the lower cone being threaded on said upper cone, the spindle including a slot in its lower end, a lifting ring above the slot, the lifting ring being located inside the cylinder beneath the bushing.

This arrangement of two opposing cones provides an even pressure against the back of the discs ensuring that they will close firmly all around their circumferences. Further, said closing mechanism is very robust preventing the valve from being stuck if not operated for a prolonged period.

Said spindle may further include a flange for engaging an upper valve seat in the housing, the flange being installed on the spindle outside of and above the cylinder and bushing.

This arrangement ensures a fully fluid closeness of the housing when the valve is in an open position.

Further, said lower cone may include a longitudinal groove and the cylinder may include a set screw in engagement with the groove.

This ensures that the turning movement of the upper cone is transferred to the lower cone.

Said threaded bolt may be terminated in a washer located below the lower cone.

This may prevent the lower cone from being screwed off the upper cone.

The inventive valve has several benefits that open for other applications than just as a blind flange valve. The valve may be operated without having to access the interior as in ordinary blind flange valves, and it has a double barrier (two discs) between the inlet and outlet. Thus, the valve may be used as a process valve in industries handling aggressive fluids.

### Brief Description of the Drawings

An embodiment of the invention will now be described in detail with reference to the appended drawings, in which:
Fig. 1a-c shows the valve in various positions, from closed to fully open, and
Fig. 2 shows components of the valve in detail.

### Detailed Description

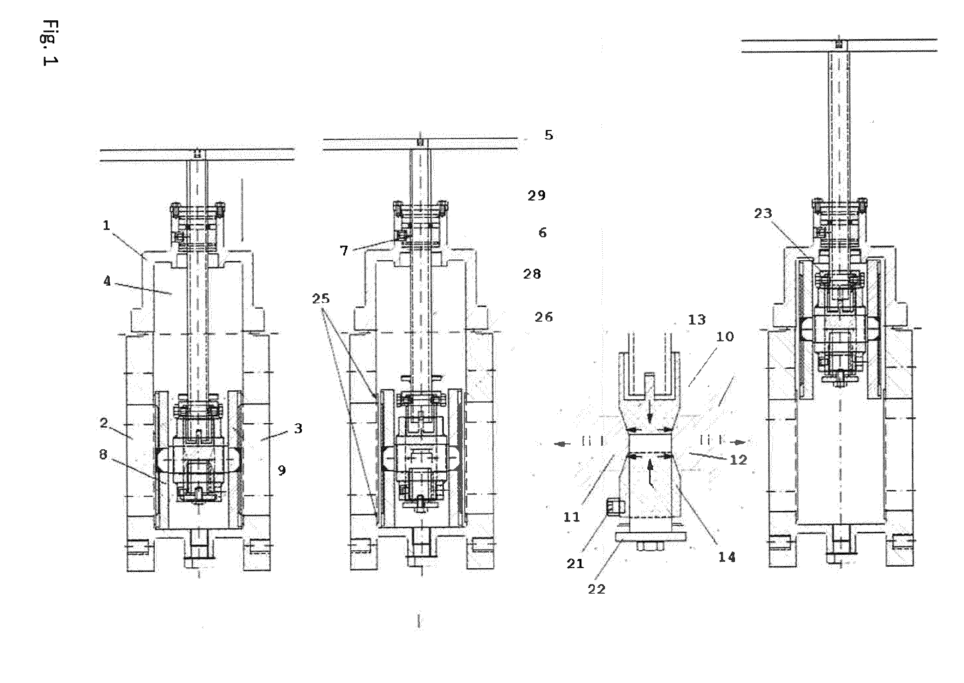

The valve in Fig. 1 includes a housing 1 intended to be installed in a pipe line. The housing includes two oppositely arranged openings 2, 3 with flanges. In the upper part of the housing, there is a chamber 4 for storing a spool, when not in use. In Fig. 1c, the spool has been pulled into this storage chamber 4 by a threaded spindle 6. The spindle 6 is in engagement with a threaded boss 7 installed in the upper part of the housing.

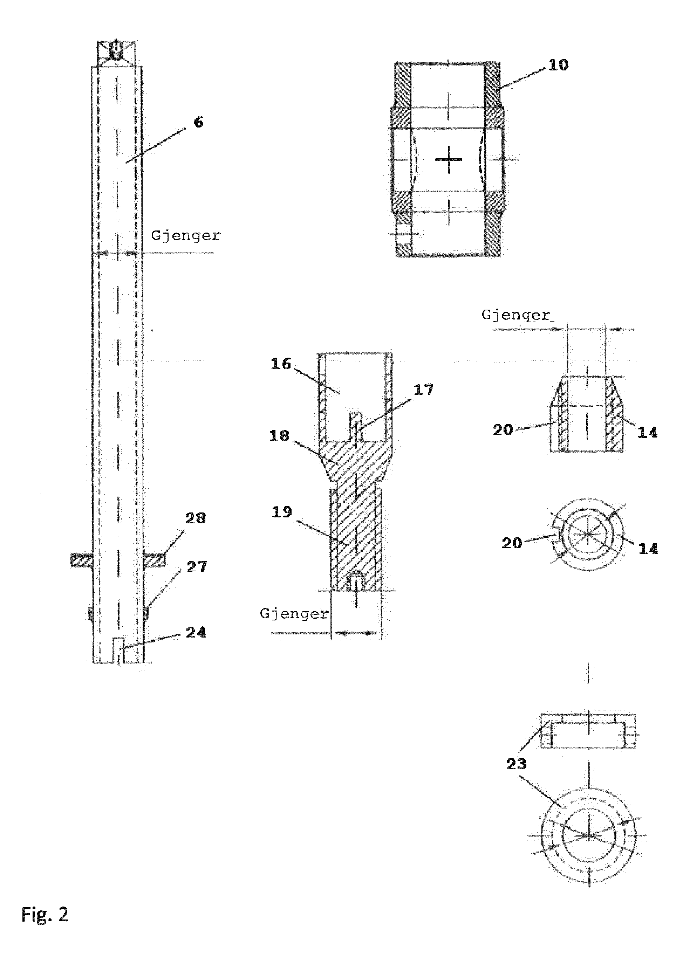

The spool includes two discs 8, 9 separated by a closure mechanism. The closure mechanism includes a cylinder 10 with radial openings for accepting rods 11, 12 that push against the discs 8, 9. The rods 11, 12 may also be incorporated in the discs 8, 9. The cylinder 10 houses an upper cone 13 and a lower cone 14. The upper cone 13 includes an upper part with a bore 16 with a tab 17 located at the bottom, a middle part 18 that is conical and a threaded bolt 19 in the lower end. The lower cone 14 includes a central bore with threads engaging said upper cone bolt 19. In the lower cone 14 there is milled a longitudinal groove 20 accepting a set screw 21 from the cylinder 10 preventing the lower cone 14 from turning. The bolt 19 is terminated in a disc or washer 22 below the lower cone 14. The cylinder 10 is closed in its upper end by a bushing 23. The spindle 6 enters the cylinder 10 through this bushing 23. The individual components forming the closure mechanism are shown in detail in Fig. 2.

Fig. 1c shows the valve open with the spool located in the upper chamber 4. By turning the spindle 6, either using a hand wheel or a geared motor, the spool is lowered into the lower part of the housing 1 between the two openings 2, 3. By further turning of the spindle 6 the spool will butt against the bottom of the housing, Fig. 1b and come to rest. The spindle 6 will then start entering the bore 16 in the upper cone, i.e. it will be lowered into the bore. Eventually, a notch 24 in the lower end of the spindle 6 will engage the tab 17 in the upper cone, whereupon the upper cone will start turning and screw the two cones together. The cones will act on the rods 11, 12 and press the discs 8, 9 against the valve seats 25, 26 in the openings 2, 3 closing the fluid path through the valve housing, Fig. 1a.

When opening the valve, the opposite sequence takes place. By turning the spindle 6 anti-clockwise, the bolt 19 will screw the cones in opposing directions. The cones 13, 14 will disengage the rods 11, 12, and the discs 8, 9 will retract from the valve seats 25, 26. By further turning of the spindle 6, the notch 24 in the spindle end will disengage the tab 17 in the upper cone 13, and this will stop further turning of the bolt 19. Onto the spindle 6 there is fastened a lifting ring 27. This ring 27 will eventually hit the bushing 23 at the top of the upper cone 13. The spindle 6 will then start to lift the spool, and the spool is lifted into the storage chamber 4. Onto the spindle 6 there is also fastened a flange 28 wearing an upper valve seat 29. The spindle 6 will advance further upwards until this upper valve seat 29 presses against the housing preventing any fluid from leaking through the threaded boss 7. Then we have returned to the position shown in Fig. 1c. In the position shown, the valve is fully open with no components obstructing the nominal opening.

## Claims

1. A blind flange/process valve including a housing (1) with an upper storage chamber (4) and a lower operating chamber, the lower operating chamber including two openings (2, 3) with valve seats (25, 26), a spindle (6) operating a spool with two discs (8, 9), and a closing mechanism located between the discs (8, 9), the closing mechanism operating to close the valve by pressing the discs (8, 9) against the valve seats (25, 26),
**characterized in that** said closing mechanism includes an upper cone (13) and a lower cone (14) opposing each other,
wherein the cones are acting on the discs providing a symmetrical pressure on the discs (8, 9),
wherein said closing mechanism includes a cylinder (10) with transverse openings for rods (11, 12) acting on the discs (8, 9), the cylinder (10) being closed in its upper end by a bushing (23) with an opening for the spindle (6),
the upper cone (13) and the lower cone (14) being arranged inside the cylinder (10), wherein the upper cone (13) includes an upper part with a bore (16) with a tab (17), a conical middle part (18), and a threaded bolt (19) at the bottom,
the lower cone (14) being threaded on said upper cone (13),
the spindle (6) including a slot (24) in its lower end, and a lifting ring (27) arranged above the slot (24), the lifting ring (27) being located inside the cylinder (10) beneath the bushing (23).

2. A valve according to claim 1, wherein said spindle (6) further includes a flange (28) for engaging an upper valve seat (29) in the housing (1), the flange (28) being installed on the spindle (6) outside of and above the cylinder (10) and bushing (23).

3. A valve according to claim 1, wherein said lower cone (14) includes a longitudinal groove (20) and the cylinder (10) includes a set screw (21) in engagement with the groove (20).

4. A valve according to claim 1, wherein said threaded bolt (19) is terminated in a washer (22) located below the lower cone (14).
